# NEUE EUROPÄISCHE PATENTSCHRIFT

(11) **EP 1 637 943 B2**
(45) Veröffentlichungstag und Bekanntmachung des Hinweises auf die Entscheidung über den Einspruch: **07.03.2012**
(45) Hinweis auf die Patenterteilung: 08.04.2009
(21) Anmeldenummer: 05020293.6
(22) Anmeldetag: 16.09.2005
(51) Int. Cl.: G05B 9/02, H02H 7/085

(54) **Steuer- und/oder Regelvorrichtung für eine elektromotorisch betätigbare Verstelleinrichtung zum Verstellen, vorzugsweise zum translatorischen Verschieben, wenigstens eines Möbelteils**
Control and/or regulation device for an electrical actuator, especially, for translating a furniture component
Dispositif de commande et/ou de régulation pour un positionneur électromécanique, en particulier, pour translater un élément de mobilier

(30) Priorität: 17.09.2004 DE 102004045568
(43) Veröffentlichungstag der Anmeldung: 22.03.2006
(73) Patentinhaber: Küster Automotive Door Systems GmbH, 35630 Ehringshausen (DE); Grass GmbH, 6973 Höchst (AT)
(72) Erfinder: Reiner, Moritz, 35630 Ehringshausen-Kölschhausen (DE); Schweinsberg, Thomas, 35630 Ehringshausen (DE); Medebach, Steffen, 35582 Wetzlar (DE); Schepp, Gunter, 35428 Langgöns-Oberkleen (DE); Zipp, Jürgen, 35619 Braunfels (DE)
(74) Vertreter: Müller, Eckhard

(56) Entgegenhaltungen:
- EP-A1- 1 374 732
- EP-A2- 1 403 996
- WO-A-01/18935
- DE-A1- 4 304 960
- DE-A1- 10 048 601
- DE-A1- 10 305 291
- DE-A1- 19 603 318
- DE-A1- 19 944 197
- US-A- 6 051 945

## Beschreibung

Die Erfindung betrifft ein Möbel mit einer elektromotorisch betätigbaren Verstelleinrichtung beinhaltend eine Steuer und/oder Regelvorrichtung.

### Stand der Technik

Aus der DE 91 132 23 U1 ist ein elektromotorischer Antrieb für eine Schublade eines Schrankes bekannt. Die Schublade wird dabei aus einer Schließstellung in eine Öffnungsstellung und zurück verfahren. Eine Steuerung des Öffnen- und Schließvorgangs ist jedoch nicht vorgesehen.

Aufgabenstellung

Der Erfindung liegt daher die Aufgabe zugrunde, eine Möbel der eingangs genannten Art zur Verfügung zu stellen, durch der mit einem Sollfrequenzgeber, einem Istfrequenzgeber und einem Phasendetektor, der als Komparator eine Phasendifferenz aus Soll- und Istfrequenz bildet und mit einem Regler gebildet wird, welcher aus der Phasendifferenz eine Stellgröße für den Regelkreis bestimmt, durch welche die Istfrequenz nachgeregelt wird eine Anpassung des Verstellens der wenigstens einen Schublade, einen Klappe, einen Tür oder dergleichen an unterschiedliche Anforderungsprofile ermöglicht ist. Nach einem Nebeneffekt der Erfindung soll die Steuer- und/oder Regelvorrichtung auch Fehler beim Verstellen der wenigstens einen Schublade, einen Klappe, einen Tür oder dergleichen detektieren und gegebenenfalls diese Fehler selbsttätig beheben. Zum schonenden Betrieb und zur Erhöhung der Lebensdauer der wenigstens einer zu verstellenden Schublade, Klappe, Tür oder dergleichen oder auch des elektromotorischen Antriebes soll zudem ein schonendes An- und Auslaufverhalten beim Verstellen der wenigstens einen Schublade, einen Klappe, einen Tür oder dergleichen realisiert werden.

### Erfindung und vorteilhafte Wirkungen

Die Aufgabe wird erfindungsgemäß gelöst durch eine Möbel mit den Merkmalen des Anspruchs 1 gelöst. Vorteilhafte Ausgestaltungen der Erfindung finden sich in den Unteransprüchen.

Dabei ist ein Regelkreis mit einem Sollwertgeber und einem Istwertgeber vorgesehen, wobei als Sollwert oder Istwert ein von der Drehzahl oder der Belastung des Antriebs proportionales Signal verarbeitet wird, und mit einem Vergleichsglied zur Bildung einer Regelabweichung, wobei die Regelabweichung einer Detektionsstufe zugeführt wird, die die Sicherheitsschaltung aktiviert.

Durch den Einsatz einer solchen Steuer- und/oder Regelvorrichtung kann das Verstellen der wenigstens einen Schublade, einen Klappe, einen Tür oder dergleichen in einfacher Weise an viele Anwendungsmöglichkeiten angepasst werden. So kann beispielsweise durch Erfassen der Drehzahl des elektromotorischen Antriebes der Verfahrweg bestimmt werden. Dadurch ist es ermöglicht, dass die Schublade nur so weit wie nötig geöffnet wird und nicht der ganze Verstellweg der Schublade bis zum vollständigen Öffnen verfahren werden muss. Weiterhin ist es auch möglich, die Leistungsaufnahme des elektromotorischen Antriebes zu kontrollieren und somit Endstellungen der Schublade zu detektieren. Natürlich kann damit auch beim Übersteigen einer vordefinierten Leistung des Antriebsmotors während des Öffnungs- oder Schließvorganges der zu verstellenden einen Schublade, einen Klappe, einen Tür oder dergleichen ein Einklemmfall detektiert werden. In einem solchen Fall wird der elektromotorische Antrieb gestoppt und gegebenenfalls reversiert. Der sich zwischen der schließenden wenigstens einen Schublade, einen Klappe, einen Tür oder dergleichen und dem Möbel befindliche Gegenstand, wie zum Beispiel die Hand einer Bedienperson, wird wieder freigegeben. Natürlich ist es auch denkbar, mehrere verstellbare Schubladen, Klappen, Türen oder dergleichen mit der Steuer- und/oder Regelvorrichtung zu steuern beziehungsweise zu regeln. Dabei kann es auch vorgesehen sein, an die Steuerung noch weitere Baugruppen anzuschließen, welche nicht zum elektromotorischen Verstellen eine wenigstens einen Schublade, einen Klappe, einen Tür oder dergleichen dienen.

Beispiele für elektromotorische Antriebe mit Einklemmsicherung sind in WO 01/18935 A oder US 6,051,945 A zu finden.

Erfindungsgemäß wird der Regelkreis gebildet. Die Sicherheitsschaltung ist durch Auswertung der Regelabweichung aktivierbar.

Nach einer vorteilhaften Ausgestaltung der Erfindung ist es vorgesehen, dass ein Mikrocontroller zur Erfassung der von der Sensoreinheit detektierten Istwerte der Stell- oder Regelgrößen ausgebildet ist. Dadurch ist gewährleistet, dass die erfindungsgemäße Vorrichtung jederzeit den Istzustand zu den Stell- oder Regelgrößen kennt. Anhand dieses Istzustandes kann gegebenenfalls eine Korrektur auf einen gewünschten Sollzustand durchgeführt werden.

Weiterhin hat es sich als vorteilhaft erwiesen, den Mikrocontroller zur Anpassung der Istwerte der Stell- oder Regelgrößen an vorgegebene beziehungsweise abgespeicherte Sollwerte der Stell- oder Regelgrößen anzupassen. Durch die Anpassung der Istwerte an die Sollwerte ist eine Fehlerkorrektur ermöglicht.

Nach einer weiteren vorteilhaften Ausgestaltung der Erfindung ist die Steuereinrichtung in Art eines Master-Slave-Systems ausgeführt, wobei die Master-Einheit als zentrale Steuereinheit ausgebildet ist und für die Steuerung der Hauptfunktionen, sowie zur Funktionsüberwachung der Slave-Einheit des Master-Slave-Systems dient, und die Slave-Einheit neben der Erfassung von Regelgrößen für Zusatzfunktionen und der Weiterleitung dieser Regelgrößen an die Master-Einheit zusätzlich als Redundanzsystem für die Master-Einheit ausgebildet ist.

Durch die Erfindung ist eine wesentliche Verbesserung der Betriebssicherheit beim Verstellen der wenigstens einen Schublade, einen Klappe, einen Tür oder dergleichen bei reduziertem Bauteileaufwand und vereinfachter Ablaufsteuerung erreicht.

Die Zuverlässigkeit der Steuervorrichtung wird dadurch erhöht, dass die Slave-Einheit als Redundanzsystem ausgebildet ist. Die Slave-Einheit übernimmt bei einem Ausfall der Master-Einheit deren Steuer- und Regelaufgaben, insbesondere wenigstens die Steuerung der Hauptfunktionen. Hierdurch lässt sich die Slave-Einheit wesentlich einfacher als die Master-Einheit ausführen, bspw. werden dann weniger Speichereinheiten benötigt. Darüber hinaus ist durch die Erfassung von Regelgrößen für Zusatzfunktionen mittels der Slave-Einheit eine Entlastung der Master-Einheit gewährleistet.

Nach einer ersten vorteilhaften Ausgestaltung der Erfindung ist zwischen Master-Einheit und Slave-Einheit eine Daten- und Steuerleitung (Kommunikationsport) gebildet. Hierdurch ist eine Funktionsüberwachung der Slave-Einheit durch die Master-Einheit und eine Datenübertragung der durch die Slave-Einheit erfassten Regelgrößen für Zusatzfunktionen an die Master-Einheit ermöglicht.

Um Zusatzfunktionen der erfindungsgemäßen Steuerung zu ermöglichen, ist die Master-Einheit mit einem Datentransfersystem (CAN-Bus-System) zum Austausch von Signalen verschiedener verstellbarer Schubladen, Klappen, Türen oder dergleichen beziehungsweise weiterer Bauteilegruppen verbunden. Hierdurch ist ein Datentransfer zwischen verschiedenen Steuergeräten und der Master-Einheit gegeben. Beispielsweise lässt sich durch den Anschluss der Master-Einheit an das CAN-Bus-System eine Sicherung realisieren, derart, dass bei ausgeschalteter Energieversorgung die wenigstens eine Schublade, eine Klappe, eine Tür oder dergleichen nicht verstellt werden kann.

Eine vorteilhafte Ausgestaltung der Erfindung besteht darin, dass die Master-Einheit mit einer Sensoreinheit zum Messen der Antriebsdrehzahl verbunden ist. Zum einen ist hierdurch die Erkennung des Betriebszustandes (Verstellen oder Stillstand) der wenigstens einen Schublade, einen Klappe, einen Tür oder dergleichen erreicht, zum anderen dienen die hieraus ermittelten Betriebszustandsparameter für die Steuerung der Zusatzfunktionen, wie beispielsweise eines Sanftan- oder - ablaufs, Positionserkennung oder dergleichen.

Für die Diagnose des Betriebszustands der verstellbaren wenigstens einen Schublade, einen Klappe, einen Tür oder dergleichen sind wenigstens zwei Messeinrichtungen vorgesehen. Hierdurch kann bei Ausfall einer Messeinrichtung weiterhin der Betriebszustand der verfahrbaren wenigstens einen Schublade, einen Klappe, einen Tür oder dergleichen durch die zweite Messeinrichtung ermittelt werden.

Nach einer anderen konstruktiv vorteilhaften Ausgestaltung der Erfindung ist eine Sensoreinheit zum Messen des Motorstromes vorgesehen, mittels welcher die Slave-Einheit die Fehlererkennung durchführt. Im Falle eines zu hohen Stromes des Antriebes wird hierdurch ein Not-Aus-Befehl an die Master-Einheit gegeben, um den Antrieb abzuschalten.

Die Kontrolle dieses Stromsensors durch die Bedienperson wird erfindungsgemäß dadurch ermöglicht, dass die Slave-Einheit ein Anzeigeelement zum Ablesen des Betriebszustandes des Stromsensors ansteuert. Hierdurch wird der Bedienperson ein Defekt des Stromsensors angezeigt.

Vorteilhafterweise weist die Slave-Einheit für den Ausfall der Energieversorgung eine Not-Batterie zur Sicherung der Stromversorgung der Steuer- oder Regelvorrichtung auf.

Nach einem anderen vorteilhaften Merkmal der Erfindung überwacht die Slave-Einheit den Zustand der Energieversorgung und steuert bei Ausfall der Energieversorgung ein Anzeigeelement an. Hierdurch wird der Bedienperson der Ausfall der Energieversorgung und ein Umschalten auf eine Not-Batterie zur Sicherung der Stromversorgung optisch angezeigt.

Eine vorteilhafte Ausgestaltung der Erfindung besteht darin, dass die Master- und die Slave-Einheit mit einer Bedienerkonsole für die Steuer- oder Regelvorrichtung verbunden ist. Hierdurch wird eine Vorgabe von Sollwerten an die Master- und Slave-Einheit ermöglicht.

In einer Weiterbildung der Erfindung ist der Antriebsmotor mit einem Drehzahlgeber gekoppelt, der als Istfrequenzgeber ausgebildet ist und als Istfrequenz ein Frequenzsignal generiert, das der Drehzahl des Antriebsmotors proportional ist, so dass eine Drehzahländerung des Antriebsmotors von dem Regelkreis sofort als eine Istfrequenzänderung erfasst wird.

Beispielsweise ist der Phasendetektor als digitaler PLL-Phasendetektor ausgebildet. Dieser stellt an seinem Ausgang das Ergebnis des Vergleichs der Sollfrequenz und der Istfrequenz in Form einer digitalen Spannung dar, welche als Regelabweichung dient. Die Phasenlage der Ist- und der Sollfrequenz zueinander wird also durch die Impulsdauer des am Ausgang des PLL-Phasendetektors ausgegebenen Spannungssignals widergespiegelt.

Vorteilhafterweise ist der PLL-Phasendetektor flankengetriggert. Dadurch wird erreicht, dass nicht die ganzen Frequenzsignale verglichen werden müssen, sondern nur eine Flanke, was zu einer Ermittlung der Phasenlage der beiden Frequenzen völlig ausreichend ist.

In einer vorteilhaften Ausgestaltung der Erfindung ist der Sollfrequenzgeber als ein externer Frequenzgenerator ausgebildet, der die Sollfrequenz als Referenzgröße generiert. Dadurch ist erreicht, dass am Phasendetektor eine konstante Referenzfrequenz zur Verfügung steht, mit deren Hilfe jede Abweichung der Istfrequenz des Antriebsmotors durch den Phasendetektor nachgewiesen werden kann.

Eine besondere Ausgestaltung der Erfindung sieht vor, dass der Regler als analoger Integrations-Regler ausgebildet ist. Somit ist es möglich die am Ausgang des PLL-Phasendetektors in Folge der Phasenverschiebung der Soll- und Istfrequenz auftretenden Spannungsimpulse aufzuintegrieren. Vorzugsweise erfolgt eine Integration der am Phasendetektor auftretenden Differenzsignale über ein bestimmtes Zeitintervall. Im Falle, dass bei der Integration der Spannungssignale ein vorgegebenes, gegebenenfalls zeitvariables oder parametervariables Gleichspannungsniveau passiert wird, reagiert das System auf ein Hindernis im Verstellweg der wenigstens einen Schublade, einen Klappe, einen Tür oder dergleichen und reversiert den Antriebsmotor.

In einer weiteren vorteilhaften Ausgestaltung der Erfindung enthält der Regelkreis einen Drehzahlregler für den Antriebsmotor, der in Abhängigkeit von den Impulsen am Ausgang des PLL-Phasendetektors eine analoge Stellgröße generiert. Diese wird dann einem Pulsweitenmodulator mit einem Schalttransistor zugeführt, der sie in eine digitale Spannung umsetzt, durch welche die Istfrequenz des Antriebsmotors auf die Sollfrequenz des externen Sollfrequenzgebers nachgeregelt wird.

Nach einer weiteren vorteilhaften Ausgestaltung der Erfindung ist der mit dem Antriebsmotor gekoppelte Drehzahlgeber als Sollfrequenzgeber ausgebildet ist und als Sollfrequenz wird ein Frequenzsignal generiert, das der Drehzahl des Antriebsmotors proportional ist.

Eine besonders vorteilhafte Ausgestaltung der Erfindung ist, dass als Istfrequenzgeber ein nachgeregelter spannungsabhängiger Oszillator (VCO) ausgebildet ist, der die Istfrequenz als Vergleichsgröße zur Sollfrequenz generiert. Durch den Einsatz eines solchen nachgeregelten spannungsabhängigen Oszillators, in Verbindung mit dem als Sollfrequenzgeber ausgebildeten Antriebsmotor, wird der Gebrauch einer Elektronik zum Nachregeln der Antriebsmotordrehzahl überflüssig.

In einer weiteren Ausgestaltung der Erfindung ist der Regler als analoger Proportional-Integrations-Regler ausgebildet. Die Spannungspulse die vom PLL-Phaeendetektor kommen werden durch diesen Proportional-Integrations-Regler nun zweifach bewertet. Zum einen wird über das Integrations-Glied des Proportional-Integrations-Reglers beim Passieren eines gewissen Spannungsniveaus wiederum die Sicherheitsschaltung aktiviert. Über das Proportional-Glied des Proportional-Integrations-Reglers wird der Arbeitspunkt des spannungsgesteuerten Oszillators nachgeführt. Dieser generiert dann aus diesem Signal eine Istfrequenz, die phasenstarr mit der ursprünglichen Sollfrequenz wird. Die Istfrequenz wird dann zum PLL-Phasendetektor zurückgeführt, wo sie wiederum mit der Sollfrequenz verglichen wird. Der PLL-Phasendetektor erzeugt aus der Phasendifferenz ein digitales Spannungssignal, das dem Proportional-Integrations-Regler zugeführt wird.

Ein wesentlicher Vorteil der Erfindung ist auch, dass zur Erkennung der Phasenverschiebung kein Prozessor erforderlich ist, so dass die Einklemmerkennung vollständig aus einem vorhandenen Prozessor herausgenommen werden kann.

Selbstverständlich ist aber auch die Einklemmerkennung mittels eines *µ*C möglich.

Nach einer weiteren vorteilhaften Ausgestaltung der Erfindung, erzeugt ein Magnetgeber beziehungsweise ein Polrad am Ort eines Magnetfelddetektors, beispielsweise eine Hall-Sensors über eine Umdrehung einen asymmetrischen Verlauf des Magnetfeldes erzeugt. Dabei soll der Magnetfelddetektor über eine Umdrehung des Magnetrades solchen Magnetfeldern ausgesetzt werden, die während der Drehung beziehungsweise Rotation des Magnetrades eine vom üblichen Sinusverlauf abweichende Form besitzen. Beispielsweise kann der zeitliche Verlauf des Magnetfeldes am Ort des Magnetfelddetektors die Form einer sägezahnförmigen Funktion besitzen oder auch in sonstiger weise gegenüber dem üblichen sinusförmigen Verlauf modifiziert sein, so dass die vom Magnetfelddetektor erfassten Signale neben der Drehzahl auch eine Information über die Drehrichtung des Antriebes, beispielsweise des Elektromotors, beinhalten.

Unter dem Magnetgeber soll im Rahmen der vorliegenden Erfindung jeglicher Geber eines Magnetfeldes verstanden werden, der von dem Antrieb in Drehung versetzt werden kann und über eine volle Umdrehung am Ort des Magnetfelddetektors einen asymmetrischen, vom üblichen Sinusverlauf abweichenden zeitlichen Feldverlauf zeugt. Dieser asymmetrische Verlauf des Magnetfeldes ist Voraussetzung dafür, dass unter Einsatz nur eines einzigen Magnetfelddetektors ohne weitere Zusatzinformationen aus den Signalen dieses einzigen Magnetfelddetektors Rückschlüsse über die jeweilige Drehrichtung des Antriebes gewonnen werden können.

Die vorrichtung ist äußerst einfach aufgebaut, da lediglich ein einziger Detektor zum Einsatz kommt. Auch ist die Verarbeitung weiterer zusatzinformationen, wie beispielsweise der Steuersignale für den Antrieb, nicht erforderlich.

Von besonderem Vorteil wird nach einer Ausgestaltung der Erfindung das zeitlich variierende Signal des Magnetfelddetektors von der Auswerteeinrichtung mit einer Hysterese digitalisiert. Dabei wird das bipolare, analoge Ausgangssignal des Magnetfelddetektors in ein digitales Signal umgesetzt, wobei aufgrund der Hysterese das asymmetrische Signal des Magnetfelddetektors über eine Umdrehung, eine halbe Umdrehung, eine viertel Umdrehung des Magnetfeldgebers usw. je nach Drehrichtung in hinsichtlich des Tastverhältnisses unterschiedliche Pulsfolgen umgesetzt wird.

Insoweit bietet es sich bevorzugt an, dass der Magnetfeldgeber beispielsweise ein sägezahnförmig variierendes Magnetfeld am Ort des Magnetfelddetektors erzeugt, wobei das vom Magnetfelddetektor abgegebene Signal proportional zu dem jeweils detektierten Magnetfeld ist. Bei der Umsetzung dieses analogen, bipolaren Signals in ein digitales Signal sorgt die Asymmetrie der Signalform dafür, dass bei einer Digitalisierung unter bewusstem Einsatz einer Hysterese die Pulslänge der jeweils entstehenden Pulsfolge je nach Drehrichtung des Antriebes beziehungsweise Elektromotors und damit des Magnetfeldgebers unterschiedlich ist.

Dabei bietet es sich nach einer weiteren Ausführungsform der Erfindung an, dass die jeweilige Drehrichtung des Antriebes über die jeweils unterschiedlichen Tastverhältnisse des digitalisierten Signals erfasst wird. Beispielsweise sind im Falle des Einsatzes eines Magnetfeldgebers mit sägezahnförmigem Verlauf die Tastverhältnisse der Pulsfolgen bei der einen Drehrichtung kleiner als 0,5, während sie bei der anderen Drehrichtung größer als 0,5 sind. Der Unterschied der Tastverhältnisse wird umso größer, je größer die Hysterese bei der Digitalisierung eingestellt ist. Gute Ergebnisse lassen sich beispielsweise dadurch erzielen, dass die Hysterese auf etwa den halben Wertbereich des bipolaren, analogen Ausgangssignals des Magnetfelddetektors eingestellt wird. Die individuelle Einstellung hängt jedoch von den einzelnen Einsatzzwecken ab und liegt im Ermessen des angesprochenen Fachmanns.

Von besonderem Vorteil ist es, wenn der Verlauf des Magnetfeldes im wesentlichen eine Sägezahnform besitzt. Bei Einsatz eines Magnet- oder Polrades kann sich diese Sägezahnform oder eine sonstige asymmetrische Form des Magnetfeldes je nach Anzahl der Pole des Magnet- oder Polrades über eine Umdrehung mehrmals wiederholen. Im einfachsten Falle kommt ein zweipoliger Permanentmagnet als Magnetfeldgeber zum Einsatz.

Von Vorteil besitzt nach einer anderen Ausführungsform der Erfindung der Verlauf des Magnetfeldes flacher fallende und steiler ansteigende beziehungsweise flacher ansteigende und steiler fallende Flanken und ist aufgrund des unterschiedlichen Verlaufs des Ansteigens beziehungsweise Abfallens der Magnetfelder zwischen zwei Magnetpolen asymmetrisch ausgebildet. Es sind selbstverständlich andere Verläufe des Magnetfeldes zwischen zwei benachbarten Polen des Magnetfeldgebers möglich, wesentlich ist, dass der Verlauf des Magnetfeldes zwischen zwei benachbarten Polen einen nicht symmetrischen Verlauf im Vergleich zu dem zwischen den nächsten benachbarten Polen aufweist, also beispielsweise nicht sinus- oder konusförmig ausgebildet ist. Der besondere Verlauf des Magnetfeldes wird durch einen solchen Magnetfeldgeber von Vorteil erzeugt, bei dem über den Umfang des Magnetfeldgebers beziehungsweise des Polrades alternierende beziehungsweise wechselnde Bereiche gezielter Magnetfeldschwächung und/oder Magnetfeldstärkung vorgesehen sind.

Eine andere Möglichkeit besteht darin, dass der Magnetfeldgeber beziehungsweise der Magnetring oder das Polrad einen oder mehrere Luftspalte und/oder eine beispielsweise von der Kreisform abweichende Außenkontur aufweisen, zum Beispiel eine seitliche Abflachung besitzen oder gegebenenfalls elliptisch ausgebildet sind beziehungsweise eine sonstige unrunde Kontur besitzen.

Von Vorteil wird nach einer anderen vorteilhaften Ausgestaltung der Erfindung die Hysterese derart eingestellt, dass sie etwa 20 % bis ca. 80 %, bevorzugt ca. 50 % des Wertebereichs des zeitlich variierenden Signals des Magnetfeldgebers beträgt.

weiterhin ist von Vorteil vorgesehen, dass die Drehzahl des Antriebes über die Pulsfolgefrequenz des digitalen Signals erfasst wird.

Nach einer weiteren vorteilhaften Ausgestaltung der Erfindung sind eine Kenngrößendrehzahl und eine Drehrichtung eines drehbeweglichen Elementes in einem einzigen Ausgangssignal der Auswertefunktion enthalten, wobei das Ausgangssignal eine Pulsfolge und der zeitliche Abstand zwischen aufeinanderfolgenden Pulsen ein Maß für die Drehzahl und die Pulsdauer eines jeden Pulses ein Maß für die Drehrichtung ist.

Aufgrund dieser Maßnahme weist die Vorrichtung zur Erfassung der Drehzahl und Drehrichtung des drehbeweglichen Elementes neben dem Masseanschluss lediglich eine einzige Ausgangssignalleitung auf, so dass der Aufwand von Kupferleitungen, Kosten und Gewicht und auch die Verkabelung wesentlich reduziert ist.

Nach einer ersten vorteilhaften Ausgestaltung der Erfindung ist es vorgesehen, dass die digitale Auswertefunktion eine Richtungserkennungsfunktion aufweist, deren Ausgangssignal einer Monoflopfunktion zugeführt wird. Von Vorteil sind diese Funktionen in einem integrierten Schaltkreis, bspw. einem anwenderspezifischen IC (ASIC), realisiert.

Dabei bietet es sich nach einer anderen Ausgestaltung der Erfindung an, dass in Abhängigkeit des Ausgangssignals der Richtungserkennungsfunktion je nach Drehrichtung des Elementes eine erste oder eine zweite unterschiedliche Pulsdauer der Monoflopfunktion eingestellt wird. Durch diese Maßnahme kann bspw. die Pulsdauer der Einzelimpulse der Pulsfolge in Abhängigkeit von der Drehrichtung von kurz auf lang oder umgekehrt variiert werden.

Weiterhin bietet es sich an, dass das Ausgangssignal eines Sensors der Monoflopfunktion als Träger zugeführt wird.

Auch ist vorgesehen, dass der Richtungserkennungsfunktion als Eingangsgröße die Ausgangssignale beider Sensoren zugeführt werden.

Nach einer anderen Ausgestaltung der Erfindung ist vorgesehen, dass der Magnetfeldgeber als Permanentmagnet, insbesondere als Ringmagnet, ausgebildet ist.

Von besonderem Vorteil sind die Sensoren und die Auswertefunktion Bestandteil eines integrierten Schaltkreises, wodurch Verkabelungs- und Leitungsaufwand zwischen den Sensoren und der Auswertefunktion vermieden sind. Aufgrund dieser Maßnahme werden auch Prozesskosten eingespart, da die gesamte Sensorik auf der elektronischen Seite nur noch ein einziges Bauteil, nämlich einen IC, beinhaltet. Die Auswertung wurde vorher von einem Microcontroller vorgenommen. Dies geschieht jetzt im Schaltkreis. Der Microcontroller muss nur noch das modulierte Richtungssignal demodulieren. Dies ist mit einer Software ohne großen Aufwand zu realisieren.

Von besonderem Vorteil ist es vorgesehen, dass der integrierte Schaltkreis lediglich einen Anschluss an die Versorgung und einen Signalanschluss aufweist. Über den Signalanschluss können dann die Informationen Drehzahl und Drehrichtung des Elementes als Kenngrößen bspw. an die Steuerungselektronik weitergegeben werden.

Der Auswertefunktion ist von Vorteil eine Stromausgangsfunktion nachgeschaltet, deren Ausgang mit dem Signalanschluss des integrierten Schaltkreises verbunden ist. Dieser Signalanschluss kann zur Bewertung der Informationendrehzahl und Drehrichtung bspw. an eine Timer-Capture-Einheit weitergegeben werden.

Eine weitere Reduzierung der Anschlussleitungen der Vorrichtung wird dadurch erzielt, dass eine Versorgungsspannung für die Vorrichtung an den Signalanschluss über einen Widerstand angelegt und in den integrierten Schaltkreis eingespeist wird.

Nach einer weiteren vorteilhaften Ausgestaltung der Erfindung weist die Steuer- und/oder Regelvorrichtung eine Schließkraftbegrenzungs- und/oder Einklemmschutz- und/oder Blockadeerkennungseinrichtung auf. Dadurch ist ein Erkennen eines Hindernisses beim Verstellen der wenigstens einen Schublade, einen Klappe, einen Tür oder dergleichen gewährleistet, so dass das Verstellen der wenigstens einen Schublade, einen Klappe, einen Tür oder dergleichen durch Stoppen des elektromotorischen Antriebs angehalten wird. Gegebenenfalls erfolgt ein Reversieren des elektromotorischen Antriebs, um das Hindernis wieder freizugeben.

Um die Belastung des elektromotorischen Antriebes zu minimieren ist eine Endstellungserkennungseinrichtung vorgesehen.

Beim Erreichen der Endstellung, beispielsweise bei einer vollständig geschlossenen oder geöffneten Schublade, wird der elektromotorische Antrieb selbsttätig abgeschaltet.

Um den elektromotorischen Antrieb nochmals zu entlasten, ist zudem eine pulsweitenmoduliert gesteuerte Sanftanlaufeinrichtung vorgesehen. Dadurch ist gewährleistet, dass der elektromotorische Antrieb beim Starten nicht sofort mit voller Leistung anfährt, wodurch die Lebensdauer des elektromotorischen Antriebs deutlich erhöht werden kann.

In die gleiche Richtung zielt die Maßnahme, dass die Steuer- und/oder Regelungsvorrichtung eine pulsweitenmoduliert gesteuerte Sanftauslaufeinrichtung aufweist.

Um die Belastung des Motors nochmals zu reduzieren ist dabei eine Lasterkennungseinrichtung zur Regelung des Sanftan- und/oder -auslaufs vorgesehen.

Nach einer weiteren vorteilhaften Ausgestaltung der Erfindung weist die Steuer- und/oder Regelvorrichtung eine Positionserkennungseinrichtung auf. Durch diese Maßnahme ist es ermöglicht, die zu verstellende wenigstens eine Schublade, eine Klappe, eine Tür oder dergleichen nur so weit wie notwendig zu verstellen. Unnötige Verfahrwege der wenigstens einen Schublade, einen Klappe, einen Tür oder dergleichen werden somit vermieden.

Dabei hat es sich als vorteilhaft erwiesen, für die Positionserkennungseinrichtung als Kenngröße die Motordrehzahl zu benutzen, da die Motordrehzahl zu dem Verstellweg der verstellbaren wenigstens einen Schublade, einen Klappe, einen Tür oder dergleichen proportional ist.

Vorteilhafterweise weist die Steuer- und/oder Regelvorrichtung auch eine Betätigungseinrichtung zum Starten beziehungsweise Anhalten des Verstellvorgangs auf. Dabei können gängige Betätigungseinrichtungen, wie beispielsweise Taster und Schalter, zum Einsatz kommen.

Jedoch ist es auch vorgesehen, dass die Betätigungseinrichtung eine Lichtschranke zum Auslösen des Verstellvorganges aufweist.

Besonders vorteilhaft ist es jedoch, wenn die Betätigungseinrichtung eine Voice-Control-Einrichtung zum Betätigen aufweist. Diese hat insbesondere den Vorteil, dass ein manuelles Betätigen oder ein Durchschreiten einer Lichtschranke nicht notwendig ist und somit die Bedienperson kein manuelles Betätigen durchführen muss. Die Bedienperson braucht deshalb andere Tätigkeiten nicht zu unterbrechen, sondern kann in einfacher Weise das Verstellen der wenigstens einen Schublade, einen Klappe, einen Tür oder dergleichen durch ein akustisches Signal veranlassen. Dabei können verschiedene akustische Signale verschiedene Schubladen, Klappen, Türen oder dergleichen aktivieren.

Es hat sich jedoch auch als vorteilhaft erwiesen, dass die Betätigungseinrichtung eine Aktivierungseinrichtung aufweist, welche den Verstellvorgang der wenigstens einen Schublade, einen Klappe, einen Tür oder dergleichen startet. Die Aktivierungseinrichtung kann insbesondere so ausgebildet sein, dass beim manuellen Verstellen beziehungsweise Verschieben der wenigstens einen Schublade, einen Klappe, einen Tür oder dergleichen um einen vordefinierten Weg automatisch das Schließen beziehungsweise das Öffnen der wenigstens einen Schublade, einen Klappe, einen Tür oder dergleichen aktiviert wird.

Die Aktivierungseinrichtung kann dabei vorteilhafterweise einen Kraftsensor zur Detektion einer manuell auf die wenigstens eine Schublade, eine Klappe, eine Tür oder dergleichen aufgebrachten Kraft aufweisen. Sobald der Kraftsensor eine Kraft detektiert, die einen vorbestimmten Wert überschreitet, wird in Abhängigkeit der Richtung der eingebrachten Kraft der Schließ- oder Öffnungsvorgang zum Verstellen der wenigstens einen Schublade, einen Klappe, einen Tür oder dergleichen gestartet.

Alternativ ist es auch möglich, dass die Aktivierungseinheit wenigstens einen magnetischen Sensor aufweist, der ein manuelles Verschieben der wenigstens einen Schublade, einen Klappe, einen Tür oder dergleichen detektiert. Dies ist in einfacher Weise beispielsweise durch einen Hall-Sensor und einen zugeordneten Festmagneten zu verwirklichen, so dass der Hall-Sensor bei Bewegung des Festmagneten die Änderung der Magnetfeldstärke detektiert und somit den schließ- oder Öffnungsvorgang startet.

Nach einer weiteren vorteilhaften Ausgestaltung der Erfindung ist eine Innenbeleuchtungseinrichtung für das Möbel beziehungsweise die wenigstens eine Schublade, eine Klappe, eine Tür oder dergleichen vorgesehen, welche bei einem Verstellen der wenigstens einen Schublade, einen Klappe, einen Tür oder dergleichen aus einer Schließstellung aktivierbar ist.

Nach einer weiteren vorteilhaften Ausgestaltung der Erfindung ist eine Schließstellungserkennungseinrichtung für die wenigstens eine Schublade, eine Klappe, eine Tür oder dergleichen vorgesehen, welche bei Erkennen der Schließstellung die Innenbeleuchtung deaktiviert.

Nach einer besonders vorteilhaften Ausgestaltung der Erfindung ist eine Positionserfassungseinrichtung für die wenigstens eine Schublade, eine Klappe, eine Tür oder dergleichen vorgesehen, die nach einem Spannungsreset und/oder bei einem Fehler der Steuer- und/oder Regelvorrichtung eine Initialisierung der Positionserfassung durchführt. Durch diese Maßnahme ist gewährleistet, dass auch bei einem Stromausfall oder bei einem Fehler in der Steuerung beziehungsweise Regelung die jeweils vorhandene Istposition der wenigstens einen Schublade, einen Klappe, einen Tür oder dergleichen in seinem Verstellweg erkannt wird. Damit ist auch dann ein Erkennen der Endpositionen ermöglicht, so dass der weitere fehlerfreie Betrieb zum Verfahren der wenigstens einen Schublade, einen Klappe, einen Tür oder dergleichen gewährleistet ist.

Besonders vorteilhaft ist es dabei, wenn die Steuer- und/oder Regelvorrichtung eine integrierte Fehlererkennungseinrichtung der Positionserfassung aufweist. Dadurch ist die Bauteileanzahl reduziert, so dass die gesamte Vorrichtung klein baut.

Weiterhin hat es sich auch als vorteilhaft erwiesen, eine Notbetätigungseinrichtung zum manuellen Verstellen der wenigstens einen Schublade, einen Klappe, einen Tür oder dergleichen vorzusehen. Dies ist insbesondere dann notwendig, wenn über einen längeren Zeitraum die Energieversorgung des elektromotorischen Antriebs ausgefallen ist und auch eine gegebenenfalls vorhandene Notenergieversorgung zum elektromotorischen Verstellen der wenigstens einen Schublade, einen Klappe, einen Tür oder dergleichen nicht mehr ausreicht.

## Patentansprüche

1. Möbel, wie beispielsweise ein Schrank, insbesondere ein Küchenschrank, in dem eine elektromotorisch betätigbare Verstelleinrichtung vorgesehen ist, die wenigstens eine Schublade, eine Klappe, eine Tür verstellt, insbesondere verschiebt und/ oder öffnet und schließt, beinhaltend eine Steuer- und/ oder Regelvorrichtung mit wenigstens einer Sensoreinheit zur Detektion einer oder mehrerer Stell- oder Regelgrößen der Verstelleinrichtung und einem die Betriebsgrößen steuernden beziehungsweise regelnden Mikrocontroller, und mit einem Regelkreis der mit einem Sollfrequenzgeber, einem Istfrequenzgeber und einem Phasendetektor, der als Komparator eine Phasendifferenz aus Soll- und Istfrequenz bildet und mit einem Regler gebildet wird, welcher aus der Phasendifferenz eine Stellgröße für den Regelkreis bestimmt, durch welche die Istfrequenz nachgeregelt wird, wobei die Phasendifferenz einer Detektionsstufe zugeführt wird, welche eine Sicherheitsschaltung aktiviert, wobei eine pulsweitenmoduliert gesteuerte Sanftanlaufeinrichtung vorgesehen ist.

2. Möbel nach Anspruch 1, **gekennzeichnet durch** eine Steuereinrichtung für die Zufuhr elektrischer Leistung zum Antrieb sowie eine Erfassung der Ist-Drehzahl des Antriebs zur Einstellung einer Ist-Geschwindigkeit beim Verschieben der wenigstens einen Schublade, einen Klappe, einen Tür oder dergleichen.

3. Möbel nach Anspruch 2, **gekennzeichnet durch** eine Vergleichsstufe zum Vergleich der Ist-Drehzahl mit einer Soll-Drehzahl, wobei die Ausgangssignale der Vergleichsstufe einer Speicherstufe als Steuersignal zugeführt werden.

4. Möbel nach Anspruch 2 oder 4, **gekennzeichnet durch** eine Anlaufcharakteristik-Stufe, deren sich zeitlich änderndes Ausgangssignal, der Speicherstufe und gegebenenfalls einer Impulspaket-Stufe zugeführt werden.

5. Möbel nach einem der vorhergehenden Ansprüche, **dadurch gekennzeichnet, dass** sie eine Endstellungserkennungseinrichtung aufweist.

6. Möbel nach einem der vorhergehenden Ansprüche, wobei eine Lasterkennungseinrichtung zur Regelung des Sanftan- und/oder auslaufs vorgesehen ist.

## Claims

1. Item of furniture such as, for example, a cupboard, particularly a kitchen cupboard, in which an adjusting device is provided, which is actuable by electric motor and which adjusts, particularly displaces and/or opens and closes, a drawer, flap or door of the like, comprising a controlling and/or regulating device with at least one sensor unit for detection of one or more setting or regulating magnitudes of the adjusting device and a microcontroller controlling or regulating the operating magnitudes, and with a regulating circuit, wherein the phase difference is fed to a detection stage which activates a safety circuit, wherein a gentle start-up device controlled by pulse width modulation is provided.

2. Item of furniture according to claim 1, **characterised by** a control device for the feed of electrical power to the drive as well as detection of the actual rotational speed of the drive for setting of an actual speed when the at least one drawer, flap, door or the like is displaced.

3. Item of furniture according to claim 2, **characterised by** a comparison stage for comparison of the actual rotational speed with a target rotational speed, wherein the output signals of the comparison stage are fed to a storage stage as control signal.

4. Item of furniture according to claim 2 or 3, **characterised by** a start-up characteristic stage, the output signal - which changes with time - of which is fed to the storage stage and optionally to a pulse burst stage.

5. Item of furniture according to any one of the preceding claims, **characterised in that** it comprises an end setting recognition device.

6. Item of furniture according to any one of the preceding claims, wherein a load recognition device for regulation of the gentle start-up and/or run-down is provided.

## Revendications

1. Meuble, tel qu'une armoire, en particulier un buffet de cuisine, dans lequel un dispositif de réglage actionnable de manière électromotorisée est prévu, qui règle, en particulier déplace en translation et/ou ouvre et ferme, au moins un tiroir, un volet, une porte, comprenant un dispositif de commande et/ou de régulation avec au moins un bloc détecteur pour détecter une ou plusieurs grandeurs de réglage ou de régulation du dispositif de réglage et un microcontrôleur commandant voire régulant les grandeurs de fonctionnement, et un circuit régulateur, où la différence de phase est acheminée à un étage de détection lequel active un circuit de sécurité, où l'on prévoit un dispositif de démarrage doux commandé par modulation de largeur d'impulsions.

2. Meuble selon la revendication 1, **caractérisé par** un dispositif de commande pour l'apport de courant électrique à l'entraînement ainsi que par une saisie de la vitesse de rotation réelle de l'entraînement pour régler une vitesse réelle lors du déplacement en translation des au moins un tiroir, un volet, une porte ou similaire.

3. Meuble selon la revendication 2, **caractérisé par** un étage de comparaison pour comparer la vitesse de rotation réelle à la vitesse de rotation théorique, les signaux de départ de l'étage de comparaison étant acheminés vers un étage d'enregistrement en tant que signal de commande.

4. Meuble selon la revendication 2 ou 4, **caractérisé par** un étage de caractéristique de démarrage dont le signal initial, variant dans le temps, est acheminé à l'étage d'enregistrement et éventuellement à un étage de paquet d'impulsions.

5. Meuble selon l'une quelconque des revendications précédentes, **caractérisé en ce qu'**il présente un dispositif de reconnaissance de fin de course.

6. Meuble selon l'une quelconque des revendications précédentes, dans lequel il est prévu un dispositif de reconnaissance de charge pour réguler le démarrage doux et/ou les arrêts doux.
